# EUROPEAN PATENT SPECIFICATION

(11) **EP 4 512 752 B1**
(45) Date of publication and mention of the grant of the patent: **01.04.2026**
(21) Application number: 24175566.9
(22) Date of filing: 13.05.2024
(51) Int. Cl.: B65G 45/24

(54) **APPARATUS FOR TRANSPORTING OR HANDLING A MAT WITH AN ENDLESS BELT AND METHOD FOR CLEANING A BELT**
VORRICHTUNG FÜR DEN TRANSPORT ODER BEHANDLUNG EINER MATTE MIT EINEM ENDLOSEN BAND UND VERFAHREN ZUR REINIGUNG EINES BANDES
APPAREIL DE TRANSPORT OU DE MANIPULATION D'UN TAPIS À BANDE SANS FIN ET PROCÉDÉ DE NETTOYAGE D'UNE BANDE

(30) Priority: 12.05.2023 CN 202310540098
(43) Date of publication of application: 26.02.2025
(73) Proprietor: Sunds Fibertech AB, 86136 Timra (SE)
(72) Inventor: ZHANG, Huaijun, Guangzhou, 510095 (CN); YUAN, Xianfeng, Guangzhou, 510095 (CN)
(74) Representative: Hartdegen, Helmut

(56) References cited:
- CN-A- 105 501 892
- CN-U- 210 504 490
- CN-U- 211 618 974
- CN-U- 213 674 334
- CN-U- 218 595 376
- DE-A1- 102013 103 018
- US-A1- 2019 084 773

## Description

### OBJECT OF THE INVENTION

The invention refers to an apparatus for transporting or handling a mat out of pourable material according to the preamble of claim 1.

In addition the invention refers to a method for cleaning a belt of an apparatus for transporting or handling a mat witch a belt according to the preamble of claim 17.

Such apparatus or method is especially suitable for a plant for producing engineered boards with a press out of the said pourable material, said material preferably comprises wood, plastic, fibers, particles, recycled material and/or a binder. For handling the pourable material in such a treatment apparatus heating units, injection units, suction units and/or pressing units can be used or installed, preferably adjacent to said belt. Regularly due to the consistency of the mat or its material (with adhesives) regularly cleaning of the belt is necessary, especially in apparatuses with arrangements for handling the mat with pressure, fluids or temperature.

### BACKGROUND OF THE INVENTION

In the production of boards out of shredded material predominately flow able or free-flowing particles of differing sizes are used mostly containing lignocellulose and/or cellulose, such as fibers, chips and the like. After usually having being provided with binder agents, these particles are discharged out of a dosing or metering hopper and delivered to a spreading head as a spreading apparatus. At least one such apparatus is usually used as a forming station for a mat in combination with an endlessly rotating belt. Through the spreading head, the particles, chips or fibers are spread to form a fleece or mat or layers of these onto a continuously running forming belt, and are then formed to a finished panel in a subsequent pressing station, mostly by heat and pressure.

As for the definition of boards there are mostly particleboards, fiberboards and other boards made out of material with greater dimensions than fibers and particles, whereas the greater material is usually able to be oriented by the scattering apparatus to obtain layers of similar oriented material, mostly length or cross to the working direction. Such boards are usually referred to as oriented stranded boards (OSB). Fiberboards mostly consists out of fibers, prepared by refiners and preferably glued in a so called blow-line. For particles wood is usually shredded to the demanded size and then mechanically mixed with adhesives or binders in drum mixers and/or are sprayed with binder during their free fall or pneumatic transportation through ducts. In the production of oriented strand boards (OSB) or flake boards it depends on in their direction adjustable flakes or strips and mostly by spreading different layers of these; especially with different orientations in the bordering layers. In other aspects recycling of waste wood or municipal waste becomes more and more popular and as such more difficult and soiling material combinations have to be transported or handled on impermeable or permeable belts.

Usually all kinds of permeable belts or webs are used to form and transport the material as mats before the main press with impermeable steel belts. But even in main presses permeable belts can be used, for example in the production of hard or flexible insulation boards. Such webs or belts can be consisting out of perforated metal or plastic belts, a woven belt or chain mail. These and similar or comparable belts are usually in need of cleaning during the production or in standstills.

Special advantages and uses have such permeable belts in de-aeration or venting devices like prepresses in which the mats are compressed and air is purged out of the mat. Other devices with such belts are (pre-)heating devices with electromagnetic waves, steam or hot air injections into the mat.

An disadvantage is that smaller particles and glue are coming into contact with the openings in these belts and are plugging these more or less promptly. Therefore cleaning devices have been arranged in the return line of the belts to keep the openings free and to clean the belts from debris.

Such cleaning devices has been made public in DE 198 54 708 A1 or DE 10 2013 103 018 A1. In both applications a well-known rotating brush has been disclosed, which is arranged with its rotating axis perpendicular to the moving direction of the belt hence over the width of the endless mesh belt, which is used for venting a mat in the process of a production of engineered boards. In the last mentioned publication a cleaning device has been disclosed in which several brushes are arranged on an endless belt which moves perpendicular to the moving direction of the endless belt. Such devices in the field for cleaning such belts are usually combined with enclosures or a housing for the protection of the surroundings. In particular, DE 10 2013 103 018 A1 discloses an apparatus according to the preamble of claim 1 and a method for cleaning a belt according to the preamble of claim 17.

All these known cleaning models have been used well in the technical field but have different issues which should be improved. Mostly the cleaning units are distributing or even catapulting the cleaned debris from the belt into the surroundings and have to be provided with expensive and high volume suction systems to avoid the contamination of other mechanical parts. Known arrangements of cleaning systems or brushes are mainly overdesigned, costly in operation and maintenance. Usually the repetitive cleaning pattern is not adjustable or limited in its adaptiveness resulting in unsatisfactory results of the cleaning or causes clocking of an permeable belt in the long run.

### SUMMARY OF THE INVENTION

The problems are solved for such an apparatus according to claim 1
and
a method for cleaning a belt of such an apparatus according to the relevant method claim 17.

Regarding the apparatus the invention emanates from an apparatus for transporting or handling a mat out of pourable material comprising at least one permeable or impermeable endless belt for transporting and contacting the lower surface of the mat and with an optional upper belt contacting the upper surface of the mat, said belt is driven around cylindrical drums and whereas at least one cleaning system for at least one belt is arranged in the return run of said belt.

The problem is solved for the apparatus in which the cleaning system is arranged on a carriage moving back and forth along a traverse over the width of the belt and that the cleaning system comprises two rotating brushes and in-between a flat nozzle for a pneumatic or hydraulic fluid directed onto the belt.

The following advantages are obtained through the features of the invention:
- due to at least two different cleaning arrangements or mechanisms in the cleaning system the cleaning effect is better, especially in the long run;
- the apparatus is smaller with lesser costs for material and working expenses;
- the cleaning is combined out of least two different cleaning effects and every cleaning step can be easily adjusted;
- maintenance of such an apparatus is easy to handle by workers and long and heavy cleaning brushes or systems can be avoided;
- installation space using housings or capsulations over the complete width of the belts are no longer necessary;
- suction devices, if necessary, are small and only needed for a part of the belt hence the cleaning system or its parts;
- the cleaning nozzle is usable for different cleaning systems, e.g. pneumatic or hydraulic, and can be easily adapted to the used apparatus or pending production;
- smaller cleaning units are more cost efficient and it is not necessary to change an only partly worn down excessively wide brushing system;
- as such the set is usable in several different applications in the industry using belts which have to be cleaned during the production, idle time or maintenance.
- In a preferred embodiment it is possible to clean the coarse contamination with the first rotating brush, afterwards the area is cleaned with a pneumatic or hydraulic, preferably high pressure, system and the second rotating brush is used for the after cleaning and removing of remaining dirt or to establish the finishing cleaning move.

The following features are combinable with the main idea of the invention and are able to improve the invention alone or in combination with other features furthermore.

Preferably the traverse is arranged perpendicular or angular to the moving direction of the belt. An angular arrangement might be necessary if the cleaning system is a one way system and is separated from the belt in the return run. Additionally or alternatively the traverse is adjustable in its angle to the moving direction of the belt automatically, preferably in response to the movement or the inversion of the cleaning unit/system.

In another advantageous possibility the two rotating brushes and the flat nozzle in-between or their activity areas on the belt are arranged along a line or in a linear manner. The cleaning mechanisms are working on the different areas of the belt in a consecutively manner, hence improving the cleaning effects.

Preferably the linear arrangement of the two brushes and the nozzle or their activity areas are perpendicular to the moving direction of the belt or the carriage.

As such the activity areas or the sphere of coverage of the brushes and the nozzles are preferably the same or comparable along the moving direction of the belt.

In a further aspect there might be an advantage if the line is angular to the moving direction of the carrier, preferably in such a way that the activity areas on the moving belt are overlapping with all three cleaning means on the carriage. This arrangement is preferred during production and/or for a continuously moving belt.

It is favored when the coverage or the activity areas and the speed of the movement of the carriage and/or the belt is adjusted in such a manner that the alternate movement of the cleaning systems allows an overlapping of the coverage or the areas at least in the beginning of the return run.

Additionally or alternatively the rotating axle of the brushes is arranged perpendicular or with an obtuse angle to the moving direction of the belt. Especially with regular openings in the belt or a woven belt it might be an advantage to have a different angle onto the belt. Normally the axle of the brushes is still parallel to the plane of the belt.

Additionally or alternatively the length of the flat nozzle is parallel to the working direction of the belt. An angular arrangement might also work, but as the cleaning system is moving the main cleaning effect should be managed with a flat nozzle and its main length parallel to the working direction.

Additionally or alternatively the orientation of the rotating axle of the two brushes is different to one another. This might improve the cleaning effect and is one of the main advantages against the prior art, as over wide brush rolls of the width are not able to work in such a way onto the same areas on the belt.

Additionally or alternatively two different kind of brushes and/or two different kind of cleaning measures, e.g. rotating speed or pressure onto the belt, are usable with the same or better advantages mentioned before.

In a further aspect of the invention or its arrangement the brushes and the flat nozzle are arranged onto a rotational axis onto the carriage to change the order of the brushes in moving direction of the carriage or to adapt the place of the activity areas or their angle to the moving direction. Such rotational axis or the cleaning system is moveable or rotatable along this axis, preferably with a drive.

Preferably the flat nozzle is arranged or connected with a power washer for washing and/or a dry-ice system for dry-ice-cleaning. Power washers are usable in certain circumstances, mainly hot or dry air is pneumatically used to clean the belt.

In an most preferred embodiment dry-ice cleaning is used to clean an impermeable or permeable belt, most of the time used in (pre-)heating devices or arrangements for a pourable mat. Such heating devices often inject hot air and/or steam into the mats and the mats or the boards to be produced might be affected negatively by water droplets due to condensing water or humidity, especially prepared by washing systems of the belt. As such it has been noticed by the inventors that dry-ice is a preferably measure to clean a belt in such circumstances with high efficiency. Unexpectedly the use of dry-ice is very effective against cured binder or caked material in the openings of such a belt without the risk of wetting or dampen the belt. As such the use of dry-ice is not limited to only preheating devices but other treatment or transporting devices with permeable or impermeable belts as well.

Another advantageous scope of application for dry-ice are transporting devices for mats, especially charged with binder or glue, and most preferably with pressing, venting, injecting or heating devices. Such heating devices might use electromagnetic waves as well.

It might be a further preferred embodiment, when the cleaning system is arranged in the return run in such a way that the debris is falling onto the cleaned belt itself, is falling onto the lower belt and/or is falling onto the mat running through the apparatus during production. These events might happen in a consecutive sequence as well. Due to regularly cleaning of the belt (with or without disruptions) the amount of debris might not be enough to disturb the surface of the mat significantly and costly suction units might be spared. Alternatively the debris might end up in a gap between the following belt system and might collected there.

In combination or as an alternative the cleaning system as a whole or at least the brushes with the nozzle are housed together or capsuled separately to prevent debris polluting the surroundings and to ease the removing measures of the dirt. As relatively small brushes are used the capsules might be small as well. Housing and capsuling might be reflecting or guiding means like plates or walls, as capsules are more like enclosures of the brushes or the cleaning system down to or near to the belt.

Preferably a suction unit might be arranged on the cleaning system and/or the carriage for the housing or the capsule for the debris removed by the brushes or the nozzle. As the housings or capsules are relatively small the suction units can be accordingly dimensioned smaller than in the state of the art.

It is an advantageous possibility, not part of the invention, to arrange a chute adjacent to the cleaning system to collect the debris removed from the belt. Such a chute can collect the debits removed from the brushes or the nozzle directly.

Additionally or alternatively and not part of the invention, the chute can be arranged stationary over the width of the belt or is connected onto the moveable cleaning system.

Additionally or alternatively and not part of the invention, a suction or cleaning unit is arranged on the cleaning system or the carriage in such a way that the debris out of the chute is collected during its movement with the cleaning system. This might be possible for a static chute or for a small chute moving with the cleaning system.

It is preferred although not part of the invention, when the cleaning system is arranged in the last third of the return run of the belt. It is highly preferred if the cleaning system is arranged directly on the last drum for the belts right before the mat is contacting the belt.

In an further embodiment of the invention it is preferred that on the reverse side of the belt along the traverse or the activity areas of the cleaning system a counter surface is arranged or used. Such a counter surface might be a plate, a suction device, a drum or just a gliding surface to stabilize the belt against the cleaning system or its enforcing parts onto the belt. The counter device might be moving according to the cleaning system or the carriage.

As already mentioned although not part of the invention, the apparatus is most suitable for a plant for producing engineered boards with a press out of the said pourable material, said material preferably comprises wood, plastic, fibers, particles, recycled material and/or a binder. Therefore such apparatus is most suitable as a treatment apparatus for the mat and is depending on its use arranged with heating units, injection units, suction units and/or pressing units for the treatment of the mat. But forming belts, on which a mat is formed by spreading units, might require regular cleaning sequences as well, especially when aggressive or procuring binder is used.

Usually, although not part of the invention, a perforated metal or plastic belt, a woven belt or chain mail is arranged, but there are also a lot of different belts known and used practically which might be cleaned effortlessly by the cleaning system.

In view of the above mentioned apparatus and its features it should be understandable that these features might be used in a corresponding method and vice versa.

Regarding the method the invention emanates from an method for transporting or handling a mat out of pourable material comprising at least one permeable or impermeable endless belt for transporting and contacting the lower surface of the mat and with an optional upper belt contacting the upper surface of the mat, said belt is driven around cylindrical drums and whereas at least one cleaning system for at least one belt is arranged in the return run of said belt.

The problem is solved for the apparatus using a the cleaning system movable on a carriage along a traverse back and forth over the width of the belt and that two cleaning sequences with two rotating brushes are conducted, whereas in-between these two cleaning sequences a further cleaning sequence is conducted with a pneumatic or hydraulic fluid directed onto the belt with a flat nozzle.

In the following definitions and other advancements of the invention are mentioned in a row without an intention to combine them as a whole: Transporting a mat is referring to the production of such a mat, for example supported by suction means under the belt for aligning the falling material onto an air-permeable belt. Nevertheless such transporting could also occur with an impermeable forming belt. Handling a mat with belts is mainly referring to double belt pre- or main presses in which the mat is compressed and/or heated and according to the production cured.

A mat has two large surfaces over the (endless) length and its width and two small sides with a certain height.

A traverse is a mechanical element strong enough for providing support for the cleaning system and is arranged over the width of the belt. A carriage is moving along the traverse with suitable means like rolls or linear conveyors. A cleaning system is connected with the carriage, for example with a frame, and the cleaning system moves over the width of the belt according to the movement of the carriage. The cleaning system has brushes and a nozzle and is arranged for cleaning purposes of the belt, as such the brushes are in contact with the belt for cleaning whereas the fluid out of the nozzle is directed perpendicular or angular onto the surface of the belt for cleaning purposes.

Activity areas are the contact zones of the belt with cleaning effects or the cleaning devices of the cleaning system. There might be systems or control units to control the strength of the cleaning measures like the pressure of the fluid or the force of the brushes onto the belt.

Preferably the movement of the carriage is fast enough to entertain the cleaning of the belt with overlapping or neighboring cleaning or activity areas.

The main purpose of a flat nozzle is to prepare a wide cleaning effect, especially perpendicular to the moving direction of the cleaning effect. A flat nozzle can also substituted with a round nozzle of similar size or a rectangular nozzle. Mainly it is intended to prepare a cleaning width covering a sufficient width as to obtain an overlapping or consecutive cleaning area in the return run of the cleaning system.

### DETAILED DESCRIPTION OF THE INVENTION

In the following, the invention will be described in more detail by the aid of some preferred embodiments with reference to the attached and schematic drawings, wherein:
- Fig. 1: presents a schematic and sectional view lengthwise to the moving direction of an endless belt of an apparatus in which the invention is used;
- Fig. 2: presents a perpendicular front view according to Fig. 1;
- Fig. 3: presents a schematic view of a different embodiment of the cleaning system and
- Fig. 4: presents a schematic view of a further embodiment of the cleaning system.

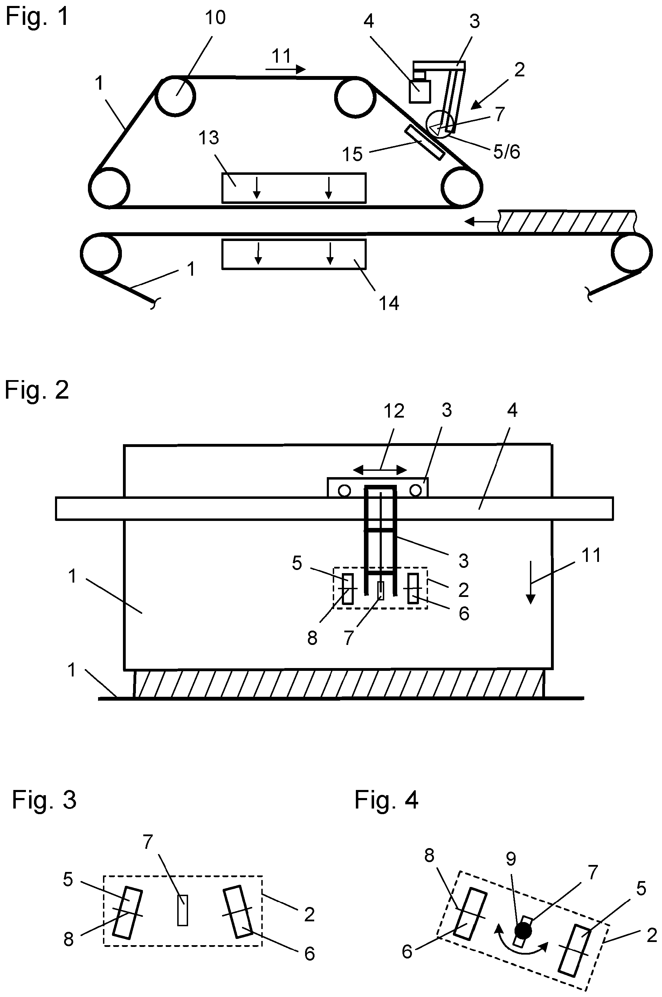

Fig. 1 presents a schematic and sectional view lengthwise to the moving direction 11 of the upper and the lower belt 1. An exemplary mat is arranged at the entrance of the double belt apparatus on the right side only and is moving in working direction into the gap between the two belts 1. The invention is not limited to such double belt arrangements as cleaning devices might be needed as well for transporting or forming belts without an upper belt. Instead of an upper belt calendars or other mechanical arrangements can be used to treat the mat depending on the production process.

In the embodiment the mat is treated with a preferably hot or heated fluid out of an injection unit 13, which is permeating the upper belt and entering the mat according to the arrows shown in the injection unit 13. On the other side of the mat and the lower belt 1 an suction unit 14 is installed as support for the flushing of the mat with the fluid. Such belts and arrangements usually need regularly cleaning to avoid caking or blocking of the openings in the belt and to secure the permeability of the belt. This cleaning can be conducted in stand stills or in determined timely intervals or continuously. Exemplary such a cleaning arrangement is shown in the return run of the upper belt 1 outside of the gap for the mat provided by both belts 1. An optional cleaning arrangement is not shown for the lower belt 1. A traverse 4 over the width of the belt 1 is arranged in the apparatus at which a carriage 3 is moveable mounted to sway the connected cleaning system 2 back and forth along the width of the belt 1. In the cleaning system 2 fixed to the carriage 3 a nozzle 7 and two brushes 5 and 6 are arranged.

Fig. 2 presents a perpendicular view of Fig. 1 from the right side above the belt in moving direction of the mat showing details of the cleaning system 2 arranged or connected with a carriage 3. The carriage 3 is automatically moveable by not further explained or shown means and is supported by the traverse 4. For the movement chains, drives, linear conveyors or other available means might be used. The cleaning system 2 shown as a dotted rectangular comprises two brushes 5, 6 and a nozzle 7 in-between. The cleaning system 2 might be housed as a whole or depending on the necessities the cleaning elements can be housed separately or in groups. For better view unnecessary mechanical elements are omitted in the figures, for example drives for the brushes or further connecting means. The nozzle is connected with a supply pipe and necessary means (not shown) for preparing pneumatic or hydraulic fluids for the nozzle 7. The moving direction 12 of the carriage 3 is from right to left and from left to right, which results in a moving direction 12 of the connected cleaning system 2. In a cleaning sequence a first brush 5 or 6 cleans an active area of the belt, afterwards the nozzle 7 cleans the same or another area of the belt 1 with a fluid directed onto the belt 1 and thirdly the following brush 6 or 5 cleans the belt at the same or another area. The belt can be moved in sequence or continuously. The velocity of the belt and/or the cleaning system should be harmonized to obtain a good cleaning effect and to provide cleaning to every part of the surface of the belt, therefore preferably avoiding any gaps in the cleaning. If the belt 1 is moving too fast for the carriage movement it may also be possible to leave out gaps in the cleaning areas along the moving belt 1. In such cases a continuous cleaning is preferred or is necessary until all areas of the belt have been cleaned after several rounds of the belt 1.

Fig. 3 shows an enlargement of the cleaning system according to Fig. 2. In a preferred embodiment the axles 8 of the brushes 5, 6 are angular to each other to improve the cleaning effect onto the belt 1. They might be also parallel but still angular to the moving direction 11 of the belt.

In another embodiment separately from the figures it might also possible to flip the angels of the axles 8 after changing the moving direction automatically or mechanically arranged.

According to Fig. 4 with another advantageous embodiment the cleaning system is arranged with a rotating axis 9 onto the carriage 3. Therefore it is possible to rotate the cleaning system to improve the arrangement the cleaning system 2 and/or the arrangement of the brushes 5, 6. **In** this arrangement it is possible to change the order of the brushes 5, 6 in moving direction 12 of the carriage 3, preferably every time the carriage changes its direction.

This might be helpful if different cleaning sequences with different brushes are desired. Alternatively it is possible to adapt the place of the activity areas or their angle to the moving direction of the carriage 3, especially in view of the moving direction 11 of the belt 1.

### List of references: SF1004

- 1: belt
- 2: cleaning system
- 3: carriage
- 4: traverse
- 5: brush (first)
- 6: brush (second)
- 7: nozzle
- 8: axle
- 9: axis
- 10: drum
- 11: moving direction of 1
- 12: moving direction of 2
- 13: injection unit
- 14: suction unit
- 15: counter surface

## Claims

1. Apparatus for transporting or handling a mat out of pourable material comprising at least one permeable or impermeable endless belt (1) for transporting and contacting the lower surface of the mat and with an optional upper belt (1) contacting the upper surface of the mat, said endless belt (1) and said optional upper belt (1) are driven around cylindrical drums (10) and whereas at least one cleaning system (2) for at least one of said endless belt (1) and said optional upper belt (1) is arranged in the return run of said at least one of said endless belt (1) and said optional upper belt (1), **characterized in that** the cleaning system (2) is arranged on a carriage (3) moving back and forth along a traverse (4) over the width of the at least one of said endless belt (1) and said optional upper belt (1) and that the cleaning system (2) comprises two rotating brushes (5, 6) and in-between a flat nozzle (7) for a pneumatic or hydraulic fluid directed onto the at least one of said endless belt (1) and said optional upper belt (1).

2. Apparatus according to claim 1, **characterized in that** the traverse (4) is arranged perpendicular or angular to the moving direction of the at least one of said endless belt (1) and said optional upper belt (1).

3. Apparatus according to at least one of the preceding claims,
**characterized in that** the traverse (4) is adjustable in its angle to the moving direction of the at least one of said endless belt (1) and said optional upper belt (1).

4. Apparatus according to at least one of the preceding claims,
**characterized in that** the rotating brushes (5, 6) and the flat nozzle (7) in-between or their activity areas on the at least one of said endless belt (1) and said optional upper belt (1) are arranged along a line or in a linear manner.

5. Apparatus according to claim 4, **characterized in that** the linear arrangement of the two brushes (5, 6) and the nozzle (7) is perpendicular to the moving direction of the at least one of said endless belt (1) and said optional upper belt (1) or the carriage (3).

6. Apparatus according to claim 4 or to claim 5, **characterized in that** the linear arrangement of the two brushes (5, 6) and the nozzle (7) is angular to the moving direction of the carrier, preferably in such a way that the activity areas on the moving at least one of said endless belt (1) and said optional upper belt (1) are overlapping with all three cleaning means on the carriage.

7. Apparatus according to at least one of the preceding claims,
**characterized in that** the rotating axle (8) of the brushes (5, 6) is arranged perpendicular or with an obtuse angle to the moving direction (11) of the at least one of said endless belt (1) and said optional upper belt (1).

8. Apparatus according to at least one of the preceding claims,
**characterized in that** the length of a flat nozzle (7) is parallel to the working direction (11) of the at least one of said endless belt (1) and said optional upper belt (1).

9. Apparatus according to at least one of the preceding claims,
**characterized in that** the orientation of the rotating axle (8) of the two brushes (5, 6) is different to each another.

10. Apparatus according to at least one of the preceding claims,
**characterized in that** two different kind of brushes (5, 6) and/or two different kind of cleaning measures, e.g. rotating speed or pressure onto the at least one of said endless belt (1) and said optional upper belt (1), are arranged.

11. Apparatus according to at least one of the preceding claims, **characterized in that** the cleaning system (2) and/or the arrangement of the brushes (5, 6) and the nozzle (7) are arranged onto a rotational axis (9) to change the order of the brushes (5, 6) in moving direction (12) of the carriage or to adapt the place of the activity areas or their angle to the moving direction (12).

12. Apparatus according to at least one of the preceding claims, **characterized in that** the flat nozzle (7) is arranged or connected with a power washer for washing and/or a dry-ice system for dry-ice-cleaning.

13. Apparatus according to the preceding claim, **characterized in that** the cleaning system (2) is arranged in the return run of the at least one of said endless belt (1) and said optional upper belt (1) in such a way that the debris is falling onto the cleaned belt itself, onto the endless tower belt or onto the mat entering the apparatus or the treatment apparatus during production.

14. Apparatus according to at least one of the preceding claims, **characterized in that** the cleaning system (2) as a whole or at least the brushes (5, 6) with the nozzle (7) are housed together or capsuled separately to prevent debris in polluting the surroundings.

15. Apparatus according to claim 14, **characterized in that** a suction unit is arranged on the cleaning system, the housing or the capsule for the debris removed by the brushes or the nozzle.

16. Apparatus according to at least one of the preceding claims,
**characterized in that** on the reverse side of the at least one of said endless belt (1) and said optional upper belt (1) along the traverse or the activity areas of the cleaning system a counter surface (15) is arranged.

17. Method for cleaning a belt of an apparatus for transporting or handling a mat out of pourable material comprising at least one permeable or impermeable endless belt (1) for transporting and contacting the lower surface of the mat and with an optional upper belt (1) contacting the upper surface of the mat, said said endless belt (1) and said optional upper belt (1) are driven around cylindrical drums (10) and whereas at least one cleaning system (2) for at least one of said endless belt (1) and said optional upper belt (1) is arranged in the return run of said at least one of said endless belt (1) and said optional upper belt (1), **characterized in that** the cleaning system (2) is moving on a carriage along a traverse back and forth over the width of the at least one of said endless belt (1) and said optional upper belt (1) and that two cleaning sequences with two rotating brushes are conducted, whereas in-between these two cleaning sequences a further cleaning sequence is conducted with a pneumatic or hydraulic fluid directed onto the at least one of said endless belt (1) and said optional upper belt (1) with a flat nozzle.

## Patentansprüche

1. Vorrichtung zum Transportieren oder Handhaben einer Matte aus rieselfähigem Material, bestehend aus zumindest einem durchlässigen oder undurchlässigen endlosen Band (1) zum Transport und in Kontakt mit der unteren Oberfläche der Matte und mit einem optionalen oberen Band (1) berührend die obere Oberfläche der Matte, wobei das endlose Band (1) und das optionale obere Band (1) um zylindrische Trommeln (10) angetrieben werden und wobei zumindest ein Reinigungssystem (2) für das zumindest eine endlose Band (1) und das optionale obere Band (1) im Rücklauf des zumindest einen endlosen Bandes (1) und des optionalen oberen Bandes (1) angeordnet ist, **dadurch gekennzeichnet, dass** das Reinigungssystem (2) auf einem Wagen (3) angeordnet ist, der sich an einer Traverse (4) über die Breite des endlosen Bandes (1) und des optionalen oberen Bandes (1) hin und her bewegt, und
dass das Reinigungssystem (2) zwei rotierende Bürsten (5, 6) umfasst und dazwischen einer flachen Düse (7) mit einem pneumatischen oder hydraulisches Fluid auf das zumindest eine endlose Band (1) und das optionale obere Band (1) gerichtet ist.

2. Vorrichtung nach Anspruch 1, **dadurch gekennzeichnet, dass** die Traverse (4) senkrecht oder winklig zur Bewegungsrichtung des unteren endlosen Bandes (1) und des optionalen oberen Bandes (1) angeordnet ist.

3. Vorrichtung nach mindestens einem der vorhergehenden Ansprüche, **dadurch gekennzeichnet, dass** die Traverse (4) in ihrem Winkel zur Bewegungsrichtung des endlosen Bandes (1) und/oder des optionalen oberen Bandes (1) einstellbar ist.

4. Vorrichtung nach mindestens einem der vorhergehenden Ansprüche, **dadurch gekennzeichnet, dass** die rotierenden Bürsten (5, 6) und die flache Düse (7) dazwischen oder ihre Wirkungsbereiche auf dem endlosen Band (1) und/oder dem optionalen oberen Band (1) geradlinig oder linear angeordnet sind.

5. Vorrichtung nach mindestens einem der vorhergehenden Ansprüche, **dadurch gekennzeichnet, dass** die lineare Anordnung der beiden Bürsten (5, 6) und der Düse (7) senkrecht zur Bewegungsrichtung des zumindest einen endlosen Bandes (1) und/oder des optionalen oberen Bandes (1) bzw. des Wagens (3) verläuft.

6. Vorrichtung nach mindestens einem der vorhergehenden Ansprüche, **dadurch gekennzeichnet, dass** die lineare Anordnung der beiden Bürsten (5, 6) und der Düse (7) winklig zur Bewegungsrichtung des Wagens angeordnet ist, bevorzugt in einer derartigen Weise, dass die Wirkungsbereiche aller drei Reinigungsmittel auf dem Wagen sich auf zumindest dem einen sich bewegenden Band (1) und/oder dem optionalen oberen Band (1) überlappen.

7. Vorrichtung nach mindestens einem der vorhergehenden Ansprüche, **dadurch gekennzeichnet, dass** die Drehachse (8) der Bürsten (5, 6) senkrecht oder in einem stumpfen Winkel zur Bewegungsrichtung (11) des zumindest einen endlosen Bandes (1) und/oder des optionalen oberen Bandes (1) angeordnet ist.

8. Vorrichtung nach mindestens einem der vorhergehenden Ansprüche, **dadurch gekennzeichnet, dass** die Längsrichtung der flachen Düse (7) parallel zur Arbeitsrichtung (11) des zumindest einen endlosen Bandes (1) und/oder des optionalen oberen Bandes (1) ist.

9. Vorrichtung nach mindestens einem der vorhergehenden Ansprüche, **dadurch gekennzeichnet, dass** die Drehachse (8) der beiden Bürsten (5, 6) unterschiedlich ausgerichtet ist.

10. Vorrichtung nach mindestens einem der vorhergehenden Ansprüche, **dadurch gekennzeichnet, dass** zwei verschiedene Arten von Bürsten (5, 6) und/oder zwei verschiedene Reinigungsarten, z. B. Drehzahl oder Anpressdruck auf das zumindest eine endlose Band (1) und/oder das optionale obere Band (1) angeordnet sind.

11. Vorrichtung nach mindestens einem der vorhergehenden Ansprüche, **dadurch gekennzeichnet, dass** das Reinigungssystem (2) und/oder die Anordnung der Bürsten (5, 6) und der Düse (7) auf einer Drehachse (9) angeordnet sind, um die Reihenfolge der Bürsten (5, 6) in Bewegungsrichtung (12) des Wagens zu ändern oder die Position der Wirkungsbereiche oder deren Winkel zur Bewegungsrichtung (12) anzupassen.

12. Vorrichtung nach mindestens einem der vorhergehenden Ansprüche, **dadurch gekennzeichnet, dass** die flache Düse (7) mit einem Hochdruckreiniger zum Waschen und/oder einem Trockeneissystem zur Trockeneisreinigung angeordnet oder verbunden ist.

13. Vorrichtung nach dem vorhergehenden Anspruch, **dadurch gekennzeichnet, dass** das Reinigungssystem (2) im Rücklauf des zumindest einen endlosen Bandes (1) und/oder des optionalen oberen Bandes (1) derart angeordnet ist, dass der Schmutz auf das gereinigte Band selbst, auf das untere Band oder auf die während der Produktion in die Vorrichtung oder die behandelnde Vorrichtung einlaufende Matte fällt.

14. Vorrichtung nach mindestens einem der vorhergehenden Ansprüche, **dadurch gekennzeichnet, dass** das Reinigungssystem (2) als Ganzes oder zumindest die Bürsten (5, 6) mit der Düse (7) zusammen eingehaust oder separat gekapselt sind, um zu verhindern, dass Schmutz die Umgebung verunreinigt.

15. Vorrichtung nach Anspruch 14, **dadurch gekennzeichnet, dass** eine Absaugeinheit am Reinigungssystem, dem Gehäuse oder der Kapsel für den von den Bürsten oder der Düse entfernten Schmutz angeordnet ist.

16. Vorrichtung nach mindestens einem der vorhergehenden Ansprüche, **dadurch gekennzeichnet, dass** auf der Rückseite des zumindest einen endlosen Bandes (1) und/oder des optionalen oberen Bandes (1) entlang der Traverse oder der Wirkungsbereiche des Reinigungssystems eine Gegenfläche (15) angeordnet ist.

17. Verfahren zur Reinigung eines Bandes einer Vorrichtung zum Transport oder zur Handhabung einer Matte aus rieselfähigem Material, umfassend zumindest ein durchlässiges oder undurchlässiges endloses Band (1) zum Transport und in Kontakt mit der Unterseite der Matte sowie ein optionales oberes Band (1) zum Kontakt mit der Oberseite der Matte, wobei das endlose Band (1) und das optionale obere Band (1) um zylindrische Trommeln (10) angetrieben werden und wobei mindestens ein Reinigungssystem (2) für das zumindest eine endlose Band (1) und/oder das optionale obere Band (1) im Rücklauf des zumindest einen endlosen Bandes (1) bzw. des optionalen oberen Bandes (1) angeordnet ist, **dadurch gekennzeichnet,**
**dass** sich das Reinigungssystem (2) auf einem Wagen entlang einer Traverse über die Breite des zumindest einen endlosen Bandes (1) bzw. des optionalen oberen Bandes (1) hin und her bewegt, und
**dass** zwei Reinigungssequenzen mit zwei rotierenden Bürsten durchgeführt werden, wobei zwischen diesen beiden Reinigungssequenzen eine weitere Reinigungssequenz mit einem pneumatischen oder hydraulischen Fluid durchgeführt wird, das mit einer flachen Düse auf das zumindest eine endlose Band (1) und ein optionales oberes Band gerichtet ist.

## Revendications

1. Appareil pour transporter ou manipuler un tapis en matériau versable, comprenant au moins une courroie sans fin (1) perméable ou imperméable pour transporter la surface inférieure du tapis et entrer en contact avec celle-ci, et une courroie supérieure facultative (1) entrant en contact avec la surface supérieure du tapis, ladite courroie sans fin (1) et ladite courroie supérieure facultative (1) sont entraînées autour de tambours cylindriques (10), et tandis qu'au moins un système de nettoyage (2) pour au moins une parmi ladite courroie sans fin (1) et ladite courroie supérieure facultative (1) est agencé dans le trajet de retour de ladite au moins une parmi ladite courroie sans fin (1) et ladite courroie supérieure facultative (1),
**caractérisé en ce que**
le système de nettoyage (2) est agencé sur un chariot (3) se déplaçant d'avant en arrière le long d'une traverse (4) sur la largeur de l'au moins une parmi ladite courroie sans fin (1) et ladite courroie supérieure facultative (1), et **en ce que** le système de nettoyage (2) comprend deux brosses rotatives (5, 6) et, entre celles-ci, une buse plate (7) pour un fluide pneumatique ou hydraulique dirigé sur l'au moins une parmi ladite courroie sans fin (1) et ladite courroie supérieure facultative (1).

2. Appareil selon la revendication 1, **caractérisé en ce que** la traverse (4) est agencée perpendiculairement ou angulairement par rapport au sens de déplacement de l'au moins une parmi ladite courroie sans fin (1) et ladite courroie supérieure facultative (1).

3. Appareil selon au moins l'une des revendications précédentes, **caractérisé en ce que** la traverse (4) est réglable en son angle par rapport au sens de déplacement de l'au moins une parmi ladite courroie sans fin (1) et ladite courroie supérieure facultative (1).

4. Appareil selon au moins l'une des revendications précédentes, **caractérisé en ce que** les brosses rotatives (5, 6) et la buse plate (7) entre celles-ci ou leurs zones d'activité sur l'au moins une parmi ladite courroie sans fin (1) et ladite courroie supérieure facultative (1) sont agencées le long d'une ligne ou de manière linéaire.

5. Appareil selon la revendication 4,
**caractérisé en ce que** l'agencement linéaire des deux brosses (5, 6) et de la buse (7) est perpendiculaire au sens de déplacement de l'au moins une parmi ladite courroie sans fin (1) et ladite courroie supérieure facultative (1), ou du chariot (3).

6. Appareil selon la revendication 4 ou la revendication 5,
**caractérisé en ce que** l'agencement linéaire des deux brosses (5, 6) et de la buse (7) est angulaire par rapport au sens de déplacement du chariot, de préférence de manière telle que les zones d'activité sur l'au moins une parmi ladite courroie sans fin (1) et ladite courroie supérieure facultative (1) en mouvement chevauchent tous les trois moyens de nettoyage sur le chariot.

7. Appareil selon au moins l'une des revendications précédentes, **caractérisé en ce que** l'axe de rotation (8) des brosses (5, 6) est agencé perpendiculairement ou selon un angle obtus par rapport au sens de travail (11) de l'au moins une parmi ladite courroie sans fin (1) et ladite courroie supérieure facultative (1).

8. Appareil selon au moins l'une des revendications précédentes, **caractérisé en ce que** la longueur d'une buse plate (7) est parallèle au sens de travail (11) de l'au moins une parmi ladite courroie sans fin (1) et ladite courroie supérieure facultative (1).

9. Appareil selon au moins l'une des revendications précédentes, **caractérisé en ce que** l'orientation de l'axe de rotation (8) des deux brosses (5, 6) est différente l'une par rapport à l'autre.

10. Appareil selon au moins l'une des revendications précédentes, **caractérisé en ce que** deux types différents de brosses (5, 6) et/ou deux types différents de mesures de nettoyage, par exemple une vitesse de rotation ou une pression sur l'au moins une parmi ladite courroie sans fin (1) et ladite courroie supérieure facultative (1), sont agencés.

11. Appareil selon au moins l'une des revendications précédentes, **caractérisé en ce que** le système de nettoyage (2) et/ou l'agencement des brosses (5, 6) et de la buse (7) sont agencés sur un axe de rotation (9) afin de changer l'ordre des brosses (5, 6) dans le sens de déplacement (12) du chariot ou afin d'adapter l'emplacement des zones d'activité ou leur angle au sens de déplacement (12).

12. Appareil selon au moins l'une des revendications précédentes, **caractérisé en ce que** la buse plate (7) est agencée ou reliée à une laveuse à pression pour le lavage et/ou à un système à glace carbonique pour le nettoyage à la glace carbonique.

13. Appareil selon la revendication précédente, **caractérisé en ce que** le système de nettoyage (2) est agencé dans le trajet de retour de l'au moins une parmi ladite courroie sans fin (1) et ladite courroie supérieure facultative (1) de manière telle que les débris tombent sur la courroie nettoyée elle-même, sur la courroie sans fin ou sur le tapis entrant dans l'appareil ou l'appareil de traitement pendant la production.

14. Appareil selon au moins l'une des revendications précédentes, **caractérisé en ce que** le système de nettoyage (2) dans son ensemble ou au moins les brosses (5, 6) avec la buse (7) sont logés conjointement ou encapsulés séparément pour empêcher des débris de polluer les alentours.

15. Appareil selon la revendication 14,
**caractérisé en ce qu'**une unité d'aspiration est agencée sur le système de nettoyage, le logement ou la capsule pour les débris éliminés par les brosses ou la buse.

16. Appareil selon au moins l'une des revendications précédentes, **caractérisé en ce que** sur la face arrière de l'au moins une parmi ladite courroie sans fin (1) et ladite courroie supérieure facultative (1) le long de la traverse ou des zones d'activité du système de nettoyage, une contre-surface (15) est agencée.

17. Procédé de nettoyage d'une courroie d'un appareil destiné à transporter ou à manipuler un tapis en matériau versable, comprenant au moins une courroie sans fin (1) perméable ou imperméable pour transporter la surface inférieure du tapis et entrer en contact avec celle-ci, et une courroie supérieure facultative (1) entrant en contact avec la surface supérieure du tapis, ladite ladite courroie sans fin (1) et ladite courroie supérieure facultative (1) sont entraînées autour de tambours cylindriques (10)
et tandis qu'au moins un système de nettoyage (2) pour au moins une parmi ladite courroie sans fin (1) et ladite courroie supérieure facultative (1) est agencé dans le trajet de retour de ladite au moins une parmi ladite courroie sans fin (1) et ladite courroie supérieure facultative (1),
**caractérisé en ce que** le système de nettoyage (2) se déplace sur un chariot le long d'une traverse d'avant en arrière sur la largeur de l'au moins une parmi ladite courroie sans fin (1) et ladite courroie supérieure facultative (1) et que deux séquences de nettoyage avec deux brosses rotatives sont effectuées, tandis qu'entre ces deux séquences de nettoyage, une séquence de nettoyage supplémentaire est effectuée avec un fluide pneumatique ou hydraulique dirigé sur l'au moins une parmi ladite courroie sans fin (1) et ladite courroie supérieure facultative (1) à l'aide d'une buse plate.
